(19) Europäisches Patentamt
European Patent Office
Office européen des brevets

(11) **EP 1 537 960 B1**

(12) **FASCICULE DE BREVET EUROPEEN**

(45) Date de publication et mention
de la délivrance du brevet:
**25.07.2007 Bulletin 2007/30**

(51) Int Cl.:
***B25J 9/16*** *(2006.01)*

(21) Numéro de dépôt: **04292231.0**

(22) Date de dépôt: **17.09.2004**

(54) **Déplacement d'un objet articulé virtuel dans un environnement virtuel en évitant les collisions internes entre les éléments articulés de l'objet articulé**

Bewegung eines virtuellen mit Gelenken ausgestatteten Objektes in einer virtuellen Umgebung mit Selbtkollisionsvermeidung zwischen den Gelenken des Objektes

Motion of an articulated virtual object in a virtual environment with self-collision avoidance between the articulated elements of the articulated object

(84) Etats contractants désignés:
**DE ES FR GB IT SE**

(30) Priorité: **29.10.2003 FR 0312640**

(43) Date de publication de la demande:
**08.06.2005 Bulletin 2005/23**

(73) Titulaire: **SNECMA**
**75015 Paris (FR)**

(72) Inventeurs:
• **Maille, Bruno**
**75015 Paris (FR)**
• **Ramstein, Edouard**
**77000 Melun (FR)**
• **Chedmail, Patrick**
**44240 La Chapelle-sur-Erdre (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
• **KUFFNER J ET AL.: "Self-collision detection and prevention for humanoid robots" PROC. IEEE INT'L CONF. ON ROBOTICS AND AUTOMATION, ICRA2002, WASHINGTON DC, USA, MAY 2002, 2002, pages 2265-2270, XP002293107 ISBN: 0-7803-7272-7**
• **KWON S J ET AL: "Self-collision avoidance for n-link redundant manipulators" DECISION AIDING FOR COMPLEX SYSTEMS. CHARLOTTESVILLE, VA., OCT. 13 - 16, 1991, PROCEEDINGS OF THE INTERNATIONAL CONFERENCE ON SYSTEMS, MAN AND CYBERNETICS, NEW YORK, IEEE, US, vol. VOL. 1, 13 octobre 1991 (1991-10-13), pages 937-942, XP010054847 ISBN: 0-7803-0233-8**
• **TORNERO J ET AL: "Spherical-object representation and fast distance computation for robotic applications" PROCEEDINGS OF THE INTERNATIONAL CONFERENCE ON ROBOTICS AND AUTOMATION SACRAMENTO, APR. 9 - 11, 1991, LOS ALAMITOS, IEEE COMP. SOC. PRESS, US, vol. VOL. 2 CONF. 7, 9 avril 1991 (1991-04-09), pages 1602-1608, XP010023991 ISBN: 0-8186-2163-X**

**Description**

Domaine de l'invention

La présente invention se rapporte au domaine de la simulation de déplacement d'un objet articulé virtuel, dans un environnement virtuel. En particulier l'invention concerne l'évitement des collisions entre les éléments articulés de l'objet articulé et le reste de l'objet articulé.

Arrière-plan de l'invention

Dans de nombreuses industries, telles que l'aéronautique ou le spatial, on fait couramment appel à des modélisations en réalité virtuelle. Par exemple, on utilise souvent une maquette numérique pour évaluer les interférences entre différentes pièces.

De même, la modélisation peut être utilisée pour simuler des actions humaines ou robotiques dans un environnement défini afin de visualiser, par exemple les déplacements qu'un technicien ou robot devra réaliser pour effectuer ces actions. Ceci est utile pour valider et optimiser l'accessibilité de certaines pièces d'un dispositif, comme celles d'un moteur d'avion, qui demandent des inspections et des maintenances régulières.

Ainsi, la facilité d'accès des différents éléments d'un dispositif peut être contrôlée virtuellement dès la modélisation de ces derniers, grâce à une simulation au moyen d'un objet articulé virtuel.

Un objet articulé virtuel est un ensemble de données numériques définissant un système cinématique caractérisé par plusieurs éléments articulés selon une pluralité de degrés de liberté.

Ainsi, à un instant donné, l'objet articulé virtuel peut être défini par sa position et orientation dans un espace métrique et par les valeurs des degrés de liberté de ces articulations. Ces données ainsi que des paramètres définissant l'environnement de l'objet articulé virtuel peuvent être stockés dans un support de données numériques.

L'utilisation d'un objet articulé virtuel pour ce type d'application existe déjà.

En effet, un exemple est donné par l'article de Chedmail, Damay et Le Roy, intitulée « Réalité virtuelle, maquette numérique du produit, outils de distribution et partage de la conception » (Journées Priméca, La Plagne 7-9 avril 1999).

Cet article propose une méthode pour valider l'accessibilité au montage/démontage d'un objet dans un environnement encombré en utilisant un modèle de déplacement de deux bras articulés virtuels ou d'un mannequin virtuel dans un environnement virtuel.

Cette méthode permet au mannequin de se déplacer dans un environnement encombré d'obstacles sans rentrer en collision avec ces obstacles.

En revanche, la posture du mannequin, lors de son déplacement, peut être quelconque ce qui peut provoquer une collision entre un membre donné du mannequin et les autres membres du mannequin. Ceci réduit la précision de la modélisation du déplacement du mannequin.

Un autre exemple est connu par l'article de Kuffner et al., intitulé « Self-collision detection and prevention for humanoid robots », Proc. IEEE International Conference on robotics and automation, Washington DC, USA, mai 2002. Cet article propose une méthode pour faire déplacer un robot selon une succession de mouvements élémentaires en évitant des collisions internes grâce à des calculs de distances d'interactions entre les différents éléments du robot. Cette méthode est très coûteuse en calcul car elle nécessite le calcul d'un très grand nombre de distances d'interaction.

Objet et résumé de l'invention

La présente invention vise à remédier aux inconvénients précités en proposant un procédé qui permet de simuler le déplacement ou la manipulation d'un objet articulé en évitant la collision entre un élément articulé donné et les autres éléments articulés de l'objet articulé et avec un temps de calcul optimal.

Un autre but est d'éviter les collisions internes entre tous les éléments articulés de l'objet articulé en faisant glisser les différents éléments articulés les uns sur les autres.

Ces buts sont atteints grâce à un procédé de déplacement d'un objet articulé virtuel dans un environnement virtuel selon une succession de mouvements élémentaires, l'objet articulé comportant un ensemble d'éléments articulés liés entre eux par un ensemble d'articulations, les positions relatives des éléments articulés étant définies par une pluralité d'angles d'articulation selon une pluralité de degrés de liberté, le procédé comportant les étapes suivantes:

- calculer une distance d'interaction entre un élément articulé donné et les autres éléments articulés de l'objet articulé;
- extraire de ladite distance d'interaction, un premier point appartenant à l'élément articulé donné et un second point appartenant à l'un des autres éléments articulés de l'objet articulé;
- définir un vecteur d'extraction unique à partir desdits premier et second points ; et
- éloigner l'élément articulé donné des autres éléments articulés de l'objet articulé, selon un mouvement défini en fonction du vecteur d'extraction unique et agissant sur les degrés de liberté de l'objet articulé pour éviter une collision entre l'élément articulé donné et les autres éléments de l'objet articulé.

Ainsi, le procédé selon l'invention évite la collision entre un élément articulé donné de l'objet articulé et les autres éléments articulés de l'objet articulé en utilisant un seul calcul de distance d'interaction.

Ceci permet une modélisation du déplacement de l'objet articulé avec une grande précision et en un temps de calcul optimal.

Avantageusement, lesdites étapes de calcul d'une distance d'interaction, d'extraction des premier et second points, de définition du vecteur d'extraction et d'éloignement de l'élément articulé sont répétées pour chacun des éléments articulés de l'objet articulé pour éviter une collision entre chaque élément articulé et le reste de l'objet articulé.

Ainsi, les différents éléments articulés se glissent les uns sur les autres sans collisions internes.

Le procédé selon l'invention comporte en outre une étape déterminant après chaque mouvement élémentaire de ladite succession de mouvements élémentaires si une collision est survenue entre l'élément articulé donné et les autres éléments articulés de l'objet articulé.

Selon un premier mode de réalisation de l'invention, la distance d'interaction correspond à une profondeur de pénétration, de sorte que le vecteur d'extraction est égal aux coordonnées du second point moins celles du premier point, la profondeur de pénétration permettant le déplacement de l'objet articulé avec une collision limitée est contrôlée entre ses éléments articulés.

Selon un second mode de réalisation de l'invention, la distance d'interaction correspond à une distance minimale, de sorte que le vecteur d'extraction est égal aux coordonnées du premier point moins celles du second point, la distance minimale permettant le déplacement de l'objet articulé sans collision entre ses éléments articulés.

Le procédé comporte en outre une étape d'annulation du dernier mouvement élémentaire de ladite succession de mouvements élémentaires lorsqu'une collision est survenue entre l'élément articulé donné et les autres éléments articulés de l'objet articulé.

Avantageusement, lesdites étapes d'extraction des premier et second points, de définition du vecteur d'extraction et d'éloignement de l'élément articulé ne sont pas exécutées lorsqu'une collision n'est pas survenue entre l'élément articulé donné et les autres éléments articulés de l'objet articulé.

L'éloignement de l'élément articulé donné des autres éléments articulés de l'objet articulé peut être réalisé selon un mouvement de rotation articulaire agissant au niveau de chacune des articulations appartenant à une chaîne d'articulations qui précédent l'élément articulé donné, le mouvement de rotation articulaire agissant au niveau d'une articulation donnée de chacune desdites articulations comportant les étapes suivantes :

- définir un premier vecteur entre le centre d'articulation de ladite articulation donnée et l'origine du vecteur d'extraction ;
- définir un second vecteur entre le centre d'articulation de ladite articulation donnée et l'extrémité du vecteur d'extraction ;

- calculer un angle de rotation faisant coïncider le premier vecteur sur le second vecteur ;
- calculer un ou des angles élémentaires de rotation articulaire en décomposant ledit angle de rotation suivant le ou les axes définissant le ou les degrés de liberté correspondant audite articulation donnée ; et
- tourner l'élément articulé au niveau de ladite articulation donnée selon un ou des angles proportionnels au dit ou aux dits angles élémentaires d'articulation.

L'angle de rotation peut être calculé au moyen d'un produit vectoriel entre les premier et second vecteurs.

Le ou les angles élémentaires d'articulation peuvent être calculés au moyen d'un ou des produits scalaires entre le produit vectoriel et le ou les axes de degré de liberté de l'articulation donnée.

Selon un mode particulier de l'invention, l'éloignement de l'élément articulé des autres éléments articulés de l'objet articulé peut être mis en oeuvre au moyen d'un agent de glissement interne agissant sur la pluralité de degrés de liberté de l'objet articulé.

Avantageusement, l'objet articulé peut être repéré dans l'environnement virtuel par une position globale, et une orientation globale, de sorte que le déplacement de l'objet articulé est mis en oeuvre au moyen d'un agent d'attraction agissant sur une position globale, et/ou une orientation globale, et/ou la pluralité de degrés de liberté de l'objet articulé.

Le procédé peut en outre comporter une étape de déplacement de l'objet articulé en temps réel par un opérateur au moyen d'un agent d'opérateur agissant sur la position et/ou l'orientation et/ou la pluralité de degrés de l'objet articulé.

Selon une particularité de l'invention, l'objet articulé est un mannequin virtuel se déplaçant sur un sol de l'environnement virtuel, le mannequin étant défini par une position sur le sol virtuel, une orientation autour d'un axe vertical perpendiculaire audit sol et passant par le centre de gravité du mannequin, et la pluralité d'angles d'articulation définissant l'ensemble de ses éléments articulés.

L'invention vise aussi un programme informatique conçu pour mettre en oeuvre le procédé décrit ci-dessus, lorsqu'il est exécuté par un ordinateur.

Brève description des dessins

D'autres particularités et avantages du procédé et du système selon l'invention ressortiront mieux à la lecture de la description faite ci-après, à titre indicatif mais non limitatif, en référence aux dessins annexés sur lesquels :

- la figure 1 est une vue en perspective des moyens matériels mis en oeuvre dans le système ou procédé de l'invention ;

- la figure 2A illustre très schématiquement un objet articulé virtuel comportant un ensemble d'éléments articulés selon l'invention ;
- la figure 2B est une variante de la figure 2A ;
- la figure 3A illustre très schématiquement un vecteur d'extraction défini dans un mode de distance minimale selon l'invention ;
- la figure 3B illustre très schématiquement un vecteur d'extraction défini dans un mode de profondeur de pénétration selon l'invention ;
- la figure 4 illustre très schématiquement un mouvement d'éloignement agissant au niveau d'une articulation donnée de l'objet articulé selon l'invention ;
- la figure 5A est un organigramme illustrant les étapes principales du déplacement de l'objet articulé selon l'invention ;
- la figure 5B est une variante de la figure 5A ; et

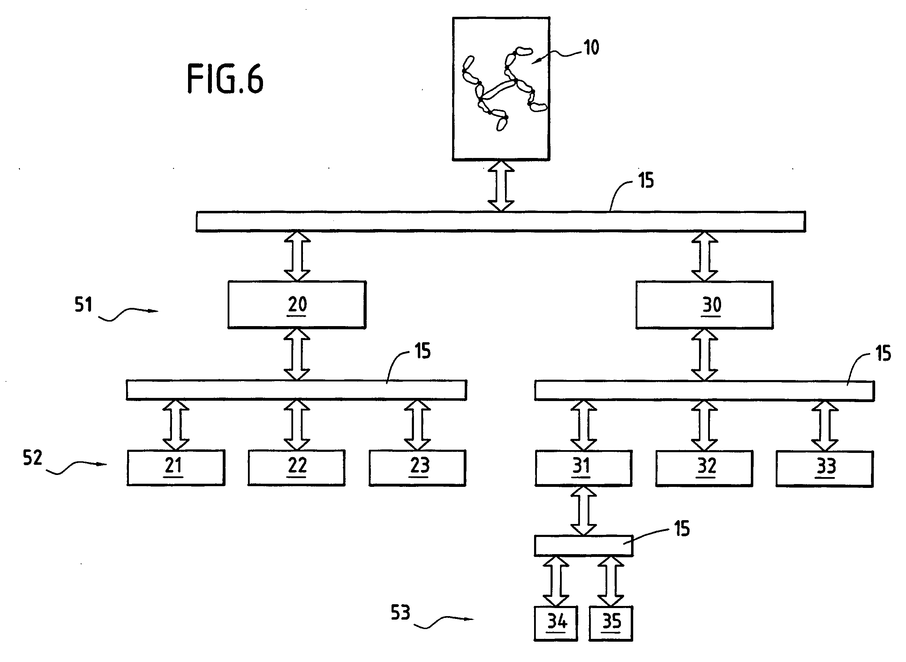

- la figure 6 illustre très schématiquement une architecture d'un système multi-agent utilisé pour le déplacement de l'objet articulé selon l'invention.

Description détaillée de modes préférentiels de réalisation

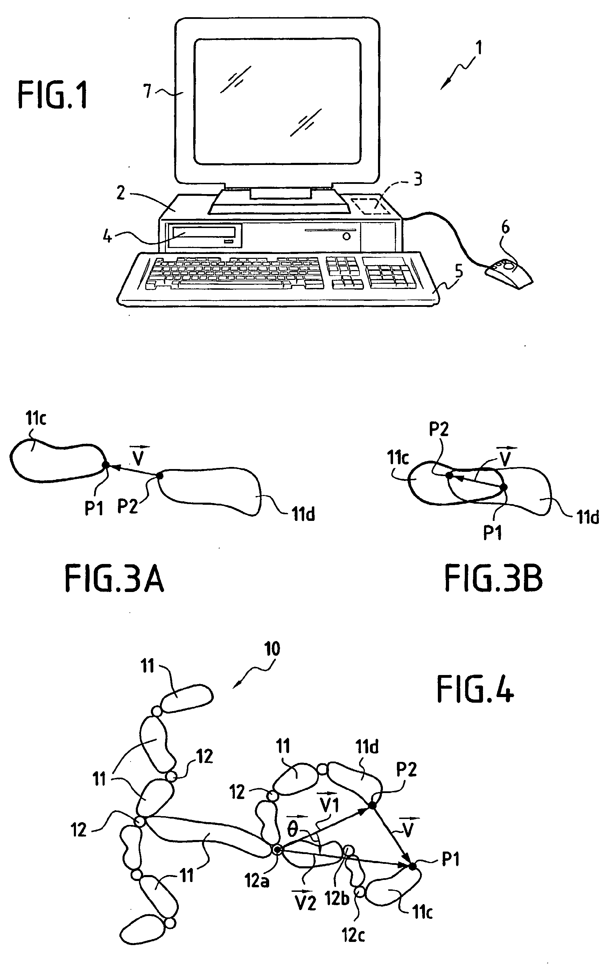

La figure 1 représente un système qui peut être utilisé pour la modélisation du déplacement d'un objet articulé. Ce système comprend une station de travail ou ordinateur 1 disposant de bonnes capacités graphiques, utilisé pour l'exécution d'un programme informatique conçu pour mettre en oeuvre le procédé selon l'invention.

L'ordinateur 1 comprend les moyens matériels que l'on trouve habituellement avec ce type d'appareil. Plus particulièrement, l'ordinateur comprend une unité centrale 2 qui exécute les séquences d'instructions du programme selon le procédé de l'invention, une mémoire centrale 3 qui stocke les données et programmes en cours d'exécution, des supports de stockages de données numériques (disque dur, CD 4, disquette,...) conservant durablement les données et les programmes manipulés, des périphériques d'entrée (clavier 5, souris « 2D » ou « 3D » 6, manette,...) ainsi que des périphériques de sortie (écran 7, casques ou lunettes stéréoscopiques,...) pour pouvoir visualiser le déplacement d'un objet articulé.

Bien entendu, afin d'augmenter la capacité de calcul, la modélisation selon l'invention peut être mise en oeuvre sur plusieurs stations de travail fonctionnant en parallèle.

La figure 2A, illustre très schématiquement un objet articulé virtuel 10 comportant un ensemble d'éléments articulés 11 liés entre eux par un ensemble d'articulations 12.

En outre, l'objet articulé 10 est caractérisé par une chaîne articulée arborescente, de sorte que les éléments articulés 11 et les articulations 12 peuvent être classées de façon connue, selon plusieurs chaînes d'articulations.

Chaque articulation 12 peut comporter plusieurs axes définissant plusieurs degrés de liberté de l'articulation, permettant ainsi de déterminer l'état interne de l'objet articulé 10 par une pluralité de degrés de liberté. A titre d'exemple, la figure 2A montre une articulation 12a comportant trois axes définissant trois degré de liberté associés à cette articulation 12a.

Ainsi, les positions relatives des éléments articulés 10 peuvent être définies, à chaque instant, par une pluralité d'angles d'articulation selon la pluralité de degrés de liberté de l'objet articulé 10.

En outre, un repère local dont l'origine est le centre de gravité G de l'objet articulé 10 peut être associé à ce dernier.

En particulier, le repère local peut comporter un seul axe Z passant par le centre de gravité G de l'objet articulé 10.

L'objet articulé 10 peut évoluer dans un environnement virtuel 13 qui peut être encombré par un certain nombre d'objets ou obstacles 13a, 13b, et 13c que l'objet articulé 10 peut, de façon connue, éviter d'entrer en collision avec eux lors de son déplacement.

Ainsi, l'objet articulé 10 ainsi que son environnement peuvent être définis dans un espace métrique $(O ; x, y, z)$, par rapport auquel la position et l'orientation de l'objet articulé 10 ainsi que les différents objets 13a, 13b, et 13c de son environnement 13 peuvent être repérés, de façon simple.

Par conséquent, en plus de la position relative de l'ensemble d'éléments articulés 11, l'objet articulé 10 peut aussi être repéré à chaque instant dans l'environnement 13, par une position globale et une orientation globale.

En effet, la position globale de l'objet articulé 10 peut être définie par les coordonnées cartésiennes selon les axes x, y, z de son centre de gravité G.

L'orientation globale peut être repérée de façon connue, par trois angles définissant l'orientation de l'axe $\vec{Z}$ associé à l'objet articulé par rapport aux axes x, y, z.

Bien entendu, il faut aussi prendre en compte, les paramètres ou contraintes imposés par les limites articulaires et par les liens physiques entre les différents membres ou éléments 11 de cet objet articulé 10.

Ces données et variables définissant l'objet articulé 10 ainsi que des paramètres définissant son environnement 13 sont stockés dans le support de données numériques 3 du système informatique 1.

La figure 2B montre qu'en particulier l'objet articulé peut être un mannequin virtuel 10a se déplaçant sur un sol de l'environnement virtuel 13.

Dans ce cas, le mannequin 10a peut être défini par une pluralité d'angles d'articulation définissant l'ensemble de ses éléments articulés, sa position sur le sol virtuel, et son orientation autour d'un axe vertical $\overrightarrow{Z1}$ perpendiculaire audit sol et passant par le centre de gravité G du mannequin 10a.

De façon connue, l'objet articulé 10 tel que le mannequin 10a peut être déplacé dans l'environnement virtuel 13 selon une succession de mouvements élémen-

Ainsi, pour générer une trajectoire permettant à l'objet articulé 10 d'atteindre sa cible 13c, il est possible d'agir sur la position globale de l'objet articulé 10 selon un pas prédéfini de déplacement en position, et/ou l'orientation globale de l'objet articulé selon un pas prédéfini de déplacement en orientation, et/ou la pluralité de degrés de liberté de l'objet articulé selon un pas prédéfini de déplacement en articulation $\Delta a$.

Afin d'éviter les collisions internes entre un élément articulé donné et les autres éléments articulés 11 de l'objet articulé 10, il est nécessaire de définir un critère de collision.

De façon connue, un critère de collision entre deux objets quelconques peut être défini par le calcul d'une distance d'interaction entre ces deux objets. Ce critère de collision peut fournir également les points réalisant cette distance d'interaction.

On notera que, la distance d'interaction peut correspondre à une distance minimale ou une profondeur de pénétration entre les deux objets.

En effet, les figures 3A et 3B, illustrent la reconnaissance de la distance d'interaction entre un élément articulé donné 11c de l'objet articulé 10 et l'un des autres éléments articulés 11d de l'objet articulé 10.

L'exemple de la figure 3A illustre plus particulièrement le critère de distance minimale entre l'élément articulé donné 11c et l'un des autres éléments articulés 11d de l'objet articulé 10, ainsi que les points P1 et P2 réalisant cette distance minimale.

Par ailleurs, l'exemple de la figure 3B illustre le critère de profondeur de pénétration entre l'élément articulé donné 11c et l'un des autres éléments articulés 11d de l'objet articulé 10, ainsi que les points P1 et P2 réalisant cette profondeur de pénétration.

Ainsi, le calcul de la distance d'interaction permet d'extraire un point P1, désigné « premier point » dans la suite de la description, appartenant à l'élément articulé donné 11c de l'objet articulé 10 et un autre point P2, désigné « second point » dans la suite de la description, appartenant à l'un des autres éléments articulés 11d de l'objet articulé 10.

Il est alors possible de définir à partir de ces premier P1 et second P2 points, un vecteur d'extraction unique $\vec{V}$.

Selon le mode basé sur le calcul d'une distance minimale (figure 3A), le vecteur d'extraction $\vec{V}$ est égal aux coordonnées du premier point P1 moins celles du second point P2. Autrement dit, le second point P2 est l'origine du vecteur d'extraction $\vec{V}$ et le premier point P1 est l'extrémité du vecteur d'extraction $\vec{V}$.

En revanche, selon le mode basé sur le calcul d'une profondeur de pénétration (figure 3B), le vecteur d'extraction $\vec{V}$ est égal aux coordonnées du second point P2 moins celles du premier point P1. Autrement dit, le premier point P1 est l'origine du vecteur d'extraction $\vec{V}$ et le second point P2 est l'extrémité du vecteur d'extraction $\vec{V}$.

Finalement, pour éviter une collision entre l'élément articulé donné 11c et les autres éléments articulés 11 de l'objet articulé 10, cet élément articulé donné 11c peut être éloigné des autres éléments articulés 11 selon un mouvement défini en fonction du vecteur d'extraction unique $\vec{V}$ et agissant sur les degrés de liberté de l'objet articulé 10.

La figure 4 illustre un mouvement d'éloignement de l'élément articulé donné 11c des autres éléments articulés 11 de l'objet articulé 10, selon le mode de distance minimale, mais bien entendu le principe est le même selon le mode de profondeur de pénétration.

Ce mouvement d'éloignement est un mouvement de rotation articulaire agissant au niveau de degrés de liberté de l'objet articulé 10.

On notera que l'éloignement de l'élément articulé donné 11c des autres éléments articulés 11 de l'objet articulé 10, est réalisé selon un mouvement de rotation articulaire agissant au niveau de chacune des articulations 12 appartenant à une chaîne d'articulations qui précèdent l'élément 11c de l'objet articulé 10 auquel appartient le premier point P1 défini ci-avant. Selon cet exemple, le second point P2 appartient à l'un des autres éléments articulés référencé par 11d.

A titre d'exemple, si l'objet articulé est un mannequin virtuel 10a et si la distance d'interaction entre l'élément articulé donné 11c et les autres éléments articulés 11 de l'objet articulé 10, est réalisée par un premier point P1 sur l'avant-bras, alors la chaîne d'articulations correspond au coude, épaule et clavicule. Autrement dit, le mouvement de rotation articulaire est calculé pour agir sur toutes les articulations 12 du bras qui précèdent l'avant bras. Par ailleurs, si le premier point P1 appartient au bras, alors la chaîne d'articulation comporterait seulement les articulations de l'épaule et de la clavicule. Si le premier point P1 appartient à la main alors toutes les articulations 12 du bras seraient considérées, c'est-à-dire que la chaîne d'articulation comporterait le poignet, le coude, l'épaule et la clavicule.

Ainsi, pour un objet articulé 10 donné, la chaîne d'articulation dépend de l'élément articulé de l'objet articulé 10 qui comporte le premier point P1.

En particulier, l'exemple de la figure 4, montre le mouvement de rotation articulaire agissant au niveau d'une articulation donnée 12a faisant partie d'une chaîne d'articulations 12a, 12b, et 12c.

En effet, ce mouvement de rotation articulaire agissant au niveau d'une articulation donnée 12a, peut être déterminé selon les étapes ci-dessous.

Un premier vecteur $\vec{V1}$ est défini entre le centre d'articulation de ladite articulation donnée 12a et l'origine du vecteur d'extraction $\vec{V}$. Selon cet exemple, l'origine du vecteur d'extraction $\vec{V}$ est le second point P2, mais serait le premier point P1 dans un mode de profondeur de pénétration.

De même, un second vecteur $\vec{V2}$ est défini entre le centre d'articulation de ladite articulation donnée 12a et l'extrémité P1 du vecteur d'extraction $\vec{V}$.

Ensuite, il est calculé un angle de rotation $\vec{\theta}$, faisant coïncider le premier vecteur $\overrightarrow{V1}$ sur le second vecteur $\overrightarrow{V2}$. L'angle de rotation $\vec{\theta}$ peut être calculé au moyen d'un produit vectoriel, entre les premier $\overrightarrow{V1}$ et second $\overrightarrow{V1}$ vecteurs selon la formule ci-dessous :

$$\vec{\theta} = \frac{\overrightarrow{V1} \times \overrightarrow{V2}}{V1 \cdot V2}$$

Cet angle de rotation $\vec{\theta}$ est décomposé en un ou des angles élémentaires $\theta_i$ de rotation articulaire suivant le ou les axes définissant le ou les degrés de liberté correspondant à ladite articulation donnée 12a de l'objet articulé 10.

Selon cet exemple, l'angle de rotation $\vec{\theta}$ est décomposé en trois angles élémentaires $\theta_i$ de rotation articulaire suivant les axes $\overrightarrow{x_a}$, $\overrightarrow{y_a}$, $\overrightarrow{z_a}$.

Le ou les angles élémentaires $\theta_i$ de rotation articulaire peuvent être calculés au moyen d'un ou des produits scalaires entre le produit vectoriel calculé ci-dessus et le ou les axes de degré de liberté de l'articulation donnée 12a.

Finalement, l'élément articulé au niveau de ladite articulation donnée est tourné selon un ou des angles $\alpha_i$ proportionnels au dit ou aux dits angles élémentaires $\theta_i$ d'articulation.

En effet, les angles élémentaires $\theta_i$ d'articulation sont normés par les valeurs correspondantes du pas de déplacement en articulation $\Delta a$.

L'élément articulé, au niveau de ladite articulation donnée 12a, est tourné selon un ou des angles $\alpha_i$ donnés par la formule suivante :

$$\alpha_i = \sin^{-1} \frac{\overrightarrow{x_i} \cdot \vec{\theta}}{\Delta a} \quad , \ i = a, b, c$$

Bien entendu les mêmes étapes ci-dessus, doivent être effectuées pour toutes les articulations 12a, 12b, et 12c composant la chaîne d'articulations considérée.

L'utilisation d'un vecteur d'extraction unique $\vec{V}$ calculé à partir d'une distance minimale ou d'une profondeur de pénétration permet d'éviter la collision entre un élément articulé donné 11c et les autres éléments articulés 11 de l'objet articulé 10 améliorant ainsi la précision du déplacement de l'objet articulé 10 avec un nombre de calcul optimal.

En effet, la présente invention utilise un seul calcul de distance minimale ou de profondeur de pénétration pour éloigner un élément articulé donné 11c des autres éléments articulés 11 de l'objet articulé 10.

En outre, afin d'éviter une collision entre chaque élément articulé 11 et le reste de l'objet articulé 10, les étapes précédentes de calcul d'une distance d'interaction, d'extraction des premier et second points, de définition du vecteur d'extraction et d'éloignement de l'élément articulé sont répétées pour chacun des éléments articulés 11 de l'objet articulé 10.

En particulier, l'élément articulé donné 11c peut être choisi parmi un sous-ensemble donné des éléments articulés 11 composant l'objet articulé 10.

En effet, certains éléments articulés peuvent être corrélés entre eux de sorte que leurs mouvements relatifs sont interdépendants et ne rentrent pas en collision les uns avec les autres. Dans ce cas, il suffit de choisir l'élément articulé donné parmi un sous-ensemble comportant les éléments articulés présentant des mouvements indépendants les uns des autres.

A titre d'exemple, dans le cas d'un mannequin 10a, on peut considérer que les jambes sont liées l'une à l'autre et que seuls les bras peuvent rentrer en collision entre eux ou avec le reste du mannequin 10a.

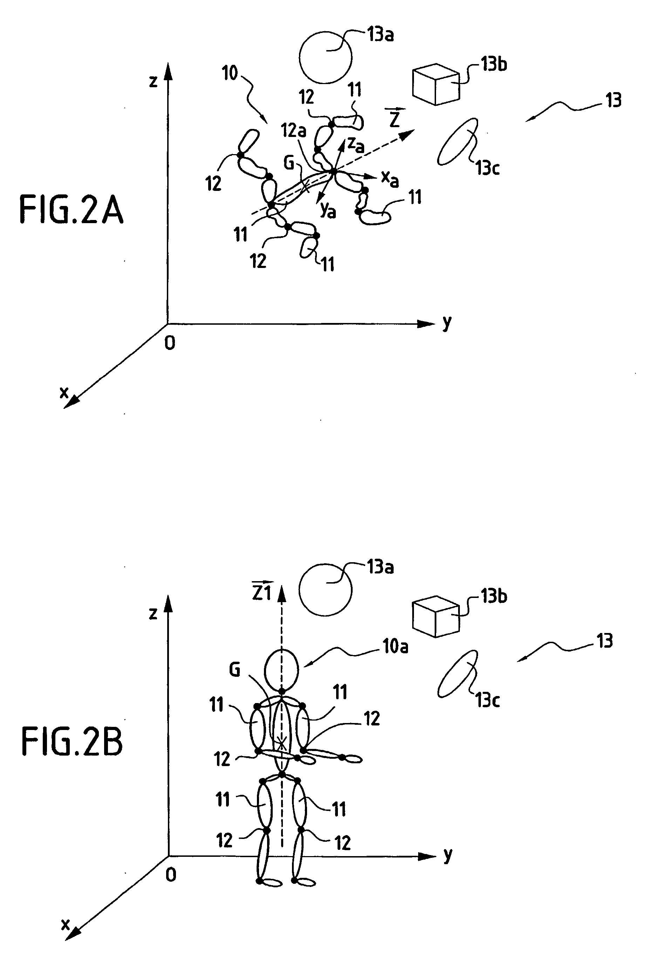

La figure 5A est un organigramme illustrant les étapes principales modélisant le déplacement de l'objet articulé 10 en évitant les collisions internes entre ses éléments articulés 11.

L'étape S0 est une initialisation de l'organigramme où différents paramètres sont définis. Par exemple, un compteur de cadencement des impulsions ou étapes de calcul de la modélisation est initialisé.

De même, les mouvements élémentaires ou pas de déplacement en position, en orientation, et en articulation $\Delta a$ peuvent aussi être définis à l'étape S0. On peut par exemple attribuer des pas différents selon la nature de l'articulation 12. On peut aussi choisir un pas constant optimal pour toutes les articulations 12 et tout au long du mouvement de l'objet articulé 10.

A l'étape S1, un calcul d'un mouvement élémentaire de l'objet articulé 10 est réalisé.

L'étape S2 est un test pour déterminer s'il y a collision ou non entre l'élément articulé donné et l'un des autres éléments articulés de l'objet articulé 10. Le critère de collision dépend de la valeur de la distance d'interaction.

Autrement dit, pour le mode basé sur la distance minimale, on peut considérer qu'une collision est survenue, si cette distance minimale est inférieure ou égale à une distance minimale seuil qui peut être égal à zéro afin de permettre le déplacement de l'objet articulé 10 sans collision entre l'élément articulé donné et les autres éléments articulés de l'objet articulé 10.

En revanche, pour le mode basé sur la profondeur de pénétration, on peut considérer qu'une collision est survenue, si cette profondeur est supérieure ou égale à une profondeur de pénétration seuil.

Ainsi, selon le choix de cette valeur seuil, on peut d'une part, permettre le déplacement de l'objet articulé 10 sans collisions internes ou d'autre part, permettre le déplacement de l'objet articulé 10 avec une collision limitée et contrôlée entre ses éléments articulés. Ce dernier cas permet de modéliser une certaine plasticité entre les éléments articulés lorsqu'ils sont en contact les uns avec les autres. S'il n'y a pas de collision selon le critère de l'étape précédente S2, alors à l'étape S3 on affiche par exemple sur l'écran 7 de l'ordinateur 1, le déplacement de l'objet articulé 10 calculé à l'étape S1 avant de revenir à cette même étape S1 pour calculer un déplacement élémentaire suivant.

Ainsi, à l'étape S3, les étapes d'extraction des premier et second points, de définition du vecteur d'extraction et d'éloignement de l'élément articulé ne sont pas exécutées.

En revanche, s'il y a collision alors on annule à l'étape S4, le déplacement élémentaire calculé à l'étape S1.

Ensuite, à l'étape S5, on calcule le mouvement défini en fonction du vecteur d'extraction unique et agissant sur les degrés de liberté de l'objet articulé pour éloigner l'élément articulé donné des autres éléments articulés de l'objet articulé 10, avant de boucler à l'étape S1.

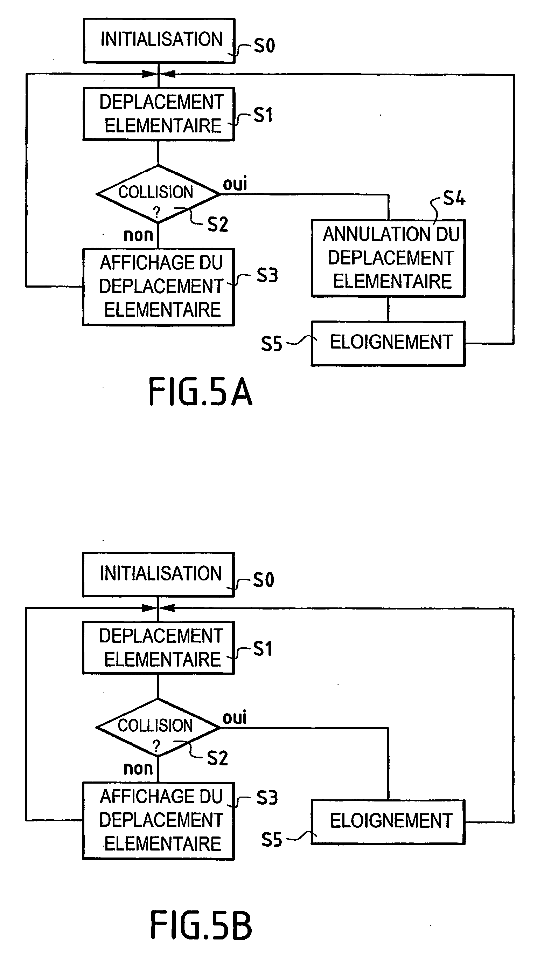

La figure 5B est une variante de la figure 5A qui est valable uniquement dans le mode de calcul utilisant la profondeur de pénétration.

L'organigramme de cette figure est le même que celui de la figure 5A, sauf que l'étape S4 n'existe plus.

Ainsi, lorsqu'il y'a une collision à l'étape S2, on passe toute suite à l'étape S5 de l'éloignement de l'élément articulé donné des autres éléments articulés de l'objet articulé, sans l'annulation du dernier déplacement élémentaire, permettant ainsi une légère pénétration entre l'élément articulé donné et les autres éléments articulés de l'objet articulé.

Le déplacement de l'objet articulé virtuel 10 dans un environnement virtuel 13 peut être mis en oeuvre au moyen d'un système « multi-agent » ou d'un tout autre système connu.

En effet, la figure 8 illustre très schématiquement, une architecture d'un système multi-agent 50 qui peut être utilisée pour modéliser le déplacement d'un objet articulé 10. Ce système multi-agent 50 est composé d'un ensemble d'éléments actifs ou agents 20, 21, 22, 23, 30, 31, 32, 33, 34 et 35 qui agissent sur les objets passifs (éléments 11 et articulations 12) composant l'objet articulé 10 en fonction de son environnement.

Les données ou variables définissant l'objet articulé 10 et son environnement constituent des données partagées 15 au travers desquelles les différents agents interagissent.

L'architecture du système multi-agent peut être organisée en plusieurs étages ou niveaux, de façon pyramidale, de sorte que les agents de base contribuent aux actions de ceux qui sont sur un niveau plus élevé.

Dans cet exemple, le système multi-agent 50 présente un premier niveau 51, un deuxième niveau 52, et un troisième niveau 53.

Le premier niveau 51 illustre l'action ou la contribution globale sur l'objet articulé 10 et comporte la contribution d'un premier agent global 20 et la contribution d'un second agent global 30 agissant sur l'objet articulé 10 par le biais des données partagées 15.

Le premier agent global 20 agit sur la position et l'orientation de l'objet articulé 10 et le second agent global 30 agit sur les degrés de liberté internes d'articulation 12 de l'objet articulé 10.

Le deuxième niveau 52 illustre différentes contributions, émanant des différents types d'agents qui engendrent les contributions des premier et second agents globaux 20 et 30 en interagissant à travers les données partagées 15.

Ainsi, le déplacement de l'objet articulé 10 peut être mis en oeuvre au moyen d'un agent d'attraction agissant sur la position globale, et/ou l'orientation globale, et/ou la pluralité de degrés de liberté de l'objet articulé.

Par ailleurs, l'éloignement de l'élément articulé donné des autres éléments articulés 11 de l'objet articulé 10 peut être mis en oeuvre au moyen d'un agent de glissement interne agissant sur la pluralité de degrés de liberté de l'objet articulé.

En outre, de manière connue, l'éloignement de l'objet articulé 10 de son environnement peut être mis en oeuvre au moyen d'un agent de glissement agissant sur la position globale, et/ou l'orientation globale, et/ou la pluralité de degrés de liberté de l'objet articulé.

Ainsi, le deuxième niveau 52 du système multi-agent 50 peut comporter un agent de glissement répulsif 21 agissant sur la position et/ou orientation globale de l'objet articulé 10, un agent d'attraction 22 agissant sur la position et/ou orientation globale de l'objet articulé 10, un agent de glissement cinématique 31 agissant sur les degrés de liberté internes d'articulation 12 de l'objet articulé 10, et un agent d'attraction cinématique 32 agissant sur les degrés de liberté internes d'articulation 12 de l'objet articulé 10.

Le troisième niveau peut comporter un agent de glissement interne 34 et un agent de glissement 35 sur obstacle qui interagissent à travers les données partagées 15 pour engendrer les contributions de l'agent de glissement cinématique 31.

L'agent de glissement 35 sur obstacle évite la collision entre l'objet articulé et l'environnement, en agissant sur la pluralité de degrés de liberté de l'objet articulé 10.

L'agent de glissement interne 34 permet ainsi d'assurer la non-collision ou l'absence de pénétration trop importante entre un élément donné et les autres éléments de l'objet articulé, en agissant sur la pluralité de degrés de liberté de l'objet articulé 10.

Dans le mode de distance minimale, et en cas de proximité immédiate, la non collision est réalisée en éloignant l'élément articulé donné des autres éléments articulés de l'objet articulé après l'annulation du déplacement menant à une collision.

Dans le mode de profondeur de pénétration, et en cas de légère pénétration, l'éloignement de l'élément articulé donné des autres éléments articulés de l'objet articulé peut être réalisé sans l'annulation du déplacement menant à la légère pénétration. Ceci permet de modéliser une plasticité de l'enveloppe de l'objet articulé. Ainsi, pour un mannequin on peut modéliser une certaine flexibilité de la chair du mannequin.

De plus, l'objet articulé 10 peut être déplacé en temps réel par un opérateur au moyen d'un agent d'opérateur agissant sur la position et/ou l'orientation et/ou la pluralité de degrés de l'objet articulé.

Ainsi, le deuxième niveau 52 du système multi-agent 50 peut aussi comporter un agent d'opérateur global 23 agissant sur la position et/ou orientation globale de l'objet articulé 10, et un agent d'opérateur interne 33 agissant sur les degrés de liberté internes d'articulation 12 de l'objet articulé 10.

## Revendications

1. Procédé de déplacement d'un objet articulé virtuel (10) dans un environnement virtuel (13) selon une succession de mouvements élémentaires, l'objet articulé (10) comportant un ensemble d'éléments articulés (11) liés entre eux par un ensemble d'articulations (12), les positions relatives des éléments articulés (11) étant définies par une pluralité d'angles d'articulation selon une pluralité de degrés de liberté, le procédé comportant une étape pour calculer une distance d'interaction entre un élément articulé donné (11c) et les autres éléments articulés (11) de l'objet articulé (10), **caractérisé en ce que** le procédé comporte en outre les étapes suivantes :

   - extraire de ladite distance d'interaction, un premier point (P1) appartenant à l'élément articulé donné (11c) et un second point (P2) appartenant à l'un des autres éléments articulés (11d) de l'objet articulé;
   - définir un vecteur d'extraction unique ($\vec{V}$) à partir desdits premier et second points ; et
   - éloigner l'élément articulé donné (11c) des autres éléments articulés de l'objet articulé, selon un mouvement défini en fonction du vecteur d'extraction unique ($\vec{V}$) et agissant sur les degrés de liberté de l'objet articulé (10) pour éviter une collision entre l'élément articulé donné (11c) et les autres éléments de l'objet articulé.

2. Procédé selon la revendication 1, **caractérisé en ce que** lesdites étapes de calcul d'une distance d'interaction, d'extraction des premier et second points, de définition du vecteur d'extraction ($\vec{V}$) et d'éloignement de l'élément articulé donné, sont répétées pour chacun des éléments articulés (11) de l'objet articulé (10) pour éviter une collision entre chaque élément articulé et le reste de l'objet articulé.

3. Procédé selon l'une quelconque des revendications 1 et 2, **caractérisé en ce qu'**il comporte en outre une étape déterminant après chaque mouvement élémentaire de ladite succession de mouvements élémentaires si une collision est survenue entre l'élément articulé donné (11c) et les autres éléments articulés de l'objet articulé (10).

4. Procédé selon l'une quelconque des revendications 1 à 3, **caractérisé en ce que** la distance d'interaction correspond à une profondeur de pénétration, de sorte que le vecteur d'extraction ($\vec{V}$) est égal aux coordonnées du second point (P2) moins celles du premier point (P1), la profondeur de pénétration permettant le déplacement de l'objet articulé (10) avec une collision limitée est contrôlée entre ses éléments articulés.

5. Procédé selon l'une quelconque des revendications 1 à 3, **caractérisé en ce que** la distance d'interaction correspond à une distance minimale, de sorte que le vecteur d'extraction ($\vec{V}$) est égal aux coordonnées du premier point (P1) moins celles du second point (P2), la distance minimale permettant le déplacement de l'objet articulé sans collision entre ses éléments articulés.

6. Procédé selon l'une quelconque des revendications 1 à 5, **caractérisé en ce qu'**il comporte en outre une étape d'annulation du dernier mouvement élémentaire de ladite succession de mouvements élémentaires lorsqu'une collision est survenue entre l'élément articulé donné (11c) et les autres éléments articulés (11) de l'objet articulé (10).

7. Procédé selon l'une quelconque des revendications 1 à 5, **caractérisé en ce que** lesdites étapes d'extraction des premier et second points (P1, P2), de définition du vecteur d'extraction ($\vec{V}$) et d'éloignement de l'élément articulé donné (11c), ne sont pas exécutées lorsqu'une collision n'est pas survenue entre l'élément articulé donné et les autres éléments articulés de l'objet articulé.

8. Procédé selon l'une quelconque des revendications 1 à 6, **caractérisé en ce que** l'éloignement de l'élément articulé donné (11c) des autres éléments articulés de l'objet articulé (10) est réalisé selon un mouvement de rotation articulaire agissant au niveau de chacune des articulations (12) appartenant à une chaîne d'articulations qui précèdent l'élément articulé donné, le mouvement de rotation articulaire agissant au niveau d'une articulation donnée (12a) de chacune desdites articulations comportant les étapes suivantes :

   - définir un premier vecteur ($\vec{V1}$) entre le centre d'articulation de ladite articulation donnée (12a) et l'origine du vecteur d'extraction ($\vec{V}$);
   - définir un second vecteur ($\vec{V2}$) entre le centre

d'articulation de ladite articulation donnée (12a) et l'extrémité du vecteur d'extraction ($\vec{V}$);
- calculer un angle de rotation ($\vec{\theta}$) faisant coïncider le premier vecteur sur le second vecteur ;
- calculer un ou des angles élémentaires de rotation articulaire en décomposant ledit angle de rotation ($\vec{\theta}$) suivant le ou les axes définissant le ou les degrés de liberté correspondant audite articulation donnée ; et
- tourner l'élément articulé au niveau de ladite articulation donnée (12a) selon un ou des angles proportionnels au dit ou aux dits angles élémentaires d'articulation.

9. Procédé selon la revendication 8, **caractérisé en ce que** l'angle de rotation est calculé au moyen d'un produit vectoriel entre les premier et second vecteurs.

10. Procédé selon l'une quelconque des revendications 8 et 9, **caractérisé en ce que** le ou les angles élémentaires d'articulation sont calculés au moyen d'un ou des produits scalaires entre le produit vectoriel et le ou les axes de degré de liberté de l'articulation donnée.

11. Procédé selon l'une quelconque des revendications 1 à 10, **caractérisé en ce que** l'éloignement de l'élément articulé des autres éléments articulés de l'objet articulé est mis en oeuvre au moyen d'un agent de glissement interne (34) agissant sur la pluralité de degrés de liberté de l'objet articulé.

12. Procédé selon l'une quelconque des revendications 1 à 11, **caractérisé en ce que** l'objet articulé est repéré dans l'environnement virtuel par une position globale, et une orientation globale, de sorte que le déplacement de l'objet articulé est mis en oeuvre au moyen d'un agent d'attraction agissant sur une position globale, et/ou une orientation globale, et/ou la pluralité de degrés de liberté de l'objet articulé.

13. Procédé selon l'une quelconque des revendications 1 à 12, **caractérisé en ce que** le procédé comporte en outre une étape de déplacement de l'objet articulé en temps réel par un opérateur au moyen d'un agent d'opérateur agissant sur la position et/ou l'orientation et/ou la pluralité de degrés de l'objet articulé.

14. Procédé selon l'une quelconque des revendications 1 à 13, **caractérisé en ce que** l'objet articulé est un mannequin virtuel (10a) se déplaçant sur un sol de l'environnement virtuel, le mannequin étant défini par une position sur le sol virtuel, une orientation autour d'un axe vertical perpendiculaire audit sol et passant par le centre de gravité du mannequin, et la pluralité d'angles d'articulation définissant l'ensemble de ses éléments articulés.

15. Programme informatique **caractérisé en ce qu'**il est conçu pour mettre en oeuvre le procédé selon l'une quelconque des revendications 1 à 14 lorsqu'il est exécuté par un ordinateur (1).

## Claims

1. A method of moving a virtual articulated object (10) in a virtual environment (13) in a succession of unit movements, the articulated object (10) comprising a set of articulated elements (11) connected together by a set of joints (12), the relative positions of the articulated elements (11) being defined by a plurality of joint angles about a plurality of degrees of freedom, the method comprising a step for calculating an interaction distance between a given articulated element (11c) and the other articulated elements (11) of the articulated object (10), the method being **characterised in that** it further comprises the following steps:

- extracting from said interaction distance, a first point (P1) belonging to the given articulated element (11c), and a second point (P2) belonging to one of the other articulated elements (11c) of the articulated object;
- defining a single extraction vector ($\vec{V}$) from said first and second points; and
- moving the given articulated element (11c) away from the other articulated elements of the articulated object in a movement defined as a function of the single extraction vector ($\vec{V}$) by acting on the degrees of freedom of the articulated object (10) in order to avoid a collision between the given articulated element (11c) and the other elements of the articulated object.

2. A method according to claim 1, **characterised in that** said steps of calculating an interaction distance, extracting the first and second points, defining the extraction vector ($\vec{V}$), and moving away the given articulated element, are repeated for each of the articulated elements (11) of the articulated object (10) in order to avoid collision between each articulated element and the remainder of the articulated object.

3. A method according to claim 1 or claim 2, **characterised in that** it further comprises a step after each unit movement in said succession of unit movements of determining whether a collision has occurred between the given articulated element (11c) and the other articulated elements of the articulated object (10).

4. A method according to any one of claims 1 to 3, **characterised in that** the interaction distance corresponds to a penetration depth, such that the extrac-

tion vector ($\vec{V}$) is equal to the coordinates of the second point (P2) minus the coordinates of the first point (P1), the penetration depth enabling the articulated object (10) to move with a limited and controlled amount of collision between its articulated elements.

5. A method according to any one of claims 1 to 3, **characterised in that** the interaction distance corresponds to a minimum distance, such that the extraction vector ($\vec{V}$) is equal to the coordinates of the first point (P1) minus the coordinates of the second point (P2), the minimum distance enabling the articulated object to move without collision between its articulated elements.

6. A method according to any one of claims 1 to 5, **characterised in that** it further comprises a step of canceling the most recent unit movement in said succession of unit movements in the event of a collision occurring between the given articulated element (11c) and the other articulated elements (11) of the articulated object (10).

7. A method according to any one of claims 1 to 5, **characterised in that** said steps of extracting the first and second points (P1, P2), of defining the extraction vector ($\vec{V}$), and of moving away the given articulated element (11c), are not executed so long as a collision does not occur between the given articulated element and the other articulated elements of the articulated object.

8. A method according to any one of claims 1 to 6, **characterised in that** the given articulated element (11c) is moved away from the other articulated elements of the articulated object (10) by a joint-flexing movement acting on each of the joints (12) belonging to a chain of joints preceding the given articulated element, with the joint-flexing movement acting at any given joint (12a) in said chain of joints comprising the following steps:

· defining a first vector ($\vec{V1}$) between the articulation centre of said given joint (12a) and the origin of the extraction vector ($\vec{V}$);
· defining a second vector ($\vec{V2}$) between the articulation centre of said given joint (12a) and the end of the extraction vector ($\vec{V}$);
· calculating an angle of rotation ($\vec{\theta}$) for causing the first vector to coincide with the second vector;
calculating one or more individual joint-flexing angles by resolving said angle of rotation ($\vec{\theta}$) on the axis or axes defining the degree or degrees of freedom corresponding to said given joint; and
· turning the articulated element about said given joint (12a) through one or more angles proportional to said individual joint angle(s).

9. A method according to claim 8, **characterised in that** the angle of rotation is calculated by means of a vector product between the first and second vectors.

10. A method according to claim 8 or claim 9, **characterised in that** the individual joint angle(s) is/are calculated by means of one or more scalar products between the vector product and the axis or axes of the degree(s) of freedom of the given joint.

11. A method according to any one of claims 1 to 10, **characterised in that** the articulated element is moved away from the other articulated elements of the articulated object by means of an internal avoider agent (34) acting on the plurality of degrees of freedom of the articulated object.

12. A method according to any one of claims 1 to 11, **characterised in that** the articulated object is specified in its virtual environment by a global position, and a global orientation, such that the articulated object is moved by means of an attractor agent acting on a global position, and/or a global orientation, and/or the plurality of degrees of freedom of the articulated object.

13. A method according to any one of claims 1 to 12, **characterised in that** the method further comprises a step of an operator moving the articulated object in real time by means of an operator agent acting on the position and/or the orientation and/or the plurality of degrees of freedom of the articulated object.

14. A method according to any one of claims 1 to 13, **characterised in that** the articulated object is a virtual dummy (10a) moving on a floor of a virtual environment, the dummy being defined by a position on the virtual floor, by an orientation about a vertical axis perpendicular to said floor and passing through the centre of gravity of the dummy, and by the plurality of joint angles defining the set of articulated elements.

15. A computer program, **characterised in that** it is designed to implement the method according to any one of claims 1 to 14 when executed by a computer (1).

**Patentansprüche**

1. Verfahren zum Verschieben eines virtuellen Gelenkobjekts (10) in einer virtuellen Umgebung (13) gemäß einer Aufeinanderfolge von elementaren Bewegungen, wobei das Gelenkobjekt (10) eine Gesamtheit von Gelenkelementen (11) umfaßt, die miteinander durch eine Gesamtheit von Gelenken (12) verbunden sind, wobei die relativen Positionen der Gelenkelemente (11) durch eine Vielzahl von Gelenkwinkeln gemäß einer Vielzahl von Freiheitsgraden definiert sind, wobei das Verfahren einen Schritt umfaßt, um eine Interaktionsdistanz zwischen einem gegebenen Gelenkelement (11c) und den anderen Gelenkelementen (11) des Gelenkobjekts (10) zu berechnen, **dadurch gekennzeichnet, daß** das Verfahren ferner die folgenden Schritte umfaßt:

- Extrahieren aus der Interaktionsdistanz eines ersten Punktes (P1), der dem gegebenen Gelenkelement (11 c) angehört, und eines zweiten Punktes (P2), der einem der anderen Gelenkelemente (11d) des Gelenkobjekts angehört;
- Definieren eines Einheitsextraktionsvektors ($\vec{V}$) aus dem ersten und zweiten Punkt; und
- Entfernen des gegebenen Gelenkelements (11c) von den anderen Gelenkelementen des Gelenkobjekts gemäß einer Bewegung, die in Abhängigkeit vom Einheitsextraktionsvektor ($\vec{V}$) definiert wird und auf die Freiheitsgrade des Gelenkobjekts (10) einwirkt, um eine Kollision zwischen dem gegebenen Gelenkelement (11c) und den anderen Gelenkobjekten zu vermeiden.

2. Verfahren nach Anspruch 1, **dadurch gekennzeichnet, daß** die Schritte des Berechnens einer Interaktionsdistanz, des Extrahierens des ersten und zweiten Punktes, des Definierens des Extraktionsvektors ($\vec{V}$) und des Entfernens des gegebenen Gelenkelements für jedes der Gelenkelemente (11) des Gelenkobjekts (10) wiederholt werden, um eine Kollision zwischen jedem Gelenkelement und dem übrigen Gelenkobjekt zu vermeiden.

3. Verfahren nach einem der Ansprüche 1 und 2, **dadurch gekennzeichnet, daß** es ferner einen Schritt umfaßt, der nach jeder elementaren Bewegung der Aufeinanderfolge von elementaren Bewegungen bestimmt, ob eine Kollision zwischen dem gegebenen Gelenkelement (11 c) und den anderen Gelenkelementen des Gelenkobjekts (10) eingetreten ist.

4. Verfahren nach einem der Ansprüche 1 bis 3, **dadurch gekennzeichnet, daß** die Interaktionsdistanz einer Eindingtiefe entspricht, so daß der Extraktionsvektor ($\vec{V}$) gleich den Koordinaten des zweiten Punktes (P2) weniger jenen des ersten Punktes (P1) ist, wobei die Eindringtiefe, die die Verschiebung des Gelenkobjekts (10) mit einer begrenzten Kollision ermöglicht, zwischen seinen Gelenkelementen kontrolliert wird.

5. Verfahren nach einem der Ansprüche 1 bis 3, **da-**

**durch gekennzeichnet, daß** die Interaktionsdistanz einer Mindestdistanz entspricht, so daß der Extraktionsvektor ($\vec{V}$) gleich den Koordinaten des ersten Punktes (P1) weniger jenen des zweiten Punktes (P2) ist, wobei die Mindestdistanz die Verschiebung des Gelenkelements ohne Kollision zwischen seinen Gelenkelementen ermöglicht.

6. Verfahren nach einem der Ansprüche 1 bis 5, **dadurch gekennzeichnet, daß** es ferner einen Schritt des Aufhebens der letzten elementaren Bewegung der Aufeinanderfolge von elementaren Bewegungen umfaßt, wenn eine Kollision zwischen dem gegebenen Gelenkelement (11c) und den anderen Gelenkelementen (11) des Gelenkobjekts (10) eingetreten ist.

7. Verfahren nach einem der Ansprüche 1 bis 5, **dadurch gekennzeichnet, daß** die Schritts des Extrahierens des ersten und zweiten Punktes (P1, P2), des Definierens des Extraktionsvektors ($\vec{V}$) und des Entfernens des gegebenen Gelenkelements (11c) nicht ausgeführt werden, wenn keine Kollision zwischen dem gegebenen Gelenkelement und den anderen Gelenkelementen des Gelenkobjekts eingetreten ist.

8. Verfahren nach einem der Ansprüche 1 bis 6, **dadurch gekennzeichnet, daß** die Entfernung des gegebenen Gelenkelements (11c) von den anderen Gelenkelementen des Gelenkobjekts (10) gemäß einer Gelenkdrehbewegung erfolgt, die im Bereich jedes der Gelenke (12), die einer Gelenkkette angehören, die dem gegebenen Gelenkelement vorangestellt ist, wirkt, wobei die Gelenkdrehbewegung im Bereich eines gegebenen Gelenks (12a) jedes der Gelenke wirkt, umfassend die folgenden Schritte:

- Definieren eines ersten Vektors ($\vec{V1}$) zwischen dem Gelenkzentrum des gegebenen Gelenks (12a) und dem Ursprung des Extraktionsvektors (V);
- Definieren eines zweiten Vektors ($\vec{V2}$) zwischen dem Gelenkzentrum des gegebenen Gelenks (12a) und dem Ende des Extraktionsvektors ($\vec{V}$);
- Berechnen eines Drehwinkels ($\vec{\theta}$), der den ersten Vektor mit dem zweiten Vektor zusammenfallen läßt;
- Berechnen eines oder mehrerer elementarer Gelenkdrehwinkel, wobei der Drehwinkel ($\vec{\theta}$) entlang der Achse(n) zerlegt wird, die den oder die Freiheitsgrade definieren, die dem gegebenen Gelenk entsprechen; und
- Drehen des Gelenkelements im Bereich des gegebenen Gelenks (12a) gemäß eines oder mehrerer Winkel(s) proportional zu dem oder den elementaren Gelenkwinkel(n).

9. Verfahren nach Anspruch 8, **dadurch gekennzeichnet, daß** der Drehwinkel mit Hilfe eines vektoriellen Produktes zwischen dem ersten und dem zweiten Vektor berechnet wird.

10. Verfahren nach einem der Ansprüche 8 und 9, **dadurch gekennzeichnet, daß** der oder die elementaren Gelenkwinkel mit Hilfe eines oder mehrerer Skalarprodukte zwischen dem vektoriellen Produkt und der oder den Freiheitsgradachsen des gegebenen Gelenks berechnet werden.

11. Verfahren nach einem der Ansprüche 1 bis 10, **dadurch gekennzeichnet, daß** die Entfernung des Gelenkelements von den anderen Gelenkelementen des Gelenkobjekts mit Hilfe eines inneren Gleitmittels (34) durchgeführt wird, das auf die Vielzahl von Freiheitsgraden des Gelenkobjekts einwirkt.

12. Verfahren nach einem der Ansprüche 1 bis 11, **dadurch gekennzeichnet, daß** das Gelenkobjekt in der virtuellen Umgebung durch eine globale Position und eine globale Ausrichtung erfaßt wird, so daß die Verschiebung des Gelenkobjekts mit Hilfe eines Anziehungsmittels ausgeführt wird, das auf eine globale Position und/oder globale Ausrichtung und/oder die Vielzahl von Freiheitsgraden des Gelenkobjekts einwirkt.

13. Verfahren nach einem der Ansprüche 1 bis 12, **dadurch gekennzeichnet, daß** das Verfahren ferner einen Schritt der Verschiebung des Gelenkobjekts in Echtzeit durch einen Bediener mit Hilfe eines Bedienermittels umfaßt, das auf die Position und/oder die Ausrichtung und/oder die Vielzahl von Graden des Gelenkobjekts einwirkt.

14. Verfahren nach einem der Ansprüche 1 bis 13, **dadurch gekennzeichnet, daß** das Gelenkobjekt ein virtuelles Mannequin (10a) ist, das sich auf einem Boden der virtuellen Umgebung bewegt, wobei das Mannequin durch eine Position auf dem virtuellen Boden, eine Ausrichtung um eine Vertikalachse senkrecht zum Boden, die durch den Schwerpunkt des Mannequins verläuft, und die Vielzahl von Gelenkwinkeln, die die Gesamtheit ihrer Gelenkelemente definieren, definiert ist.

15. Computerprogramm, **dadurch gekennzeichnet, daß** es derart konzipiert ist, daß es das Verfahren nach einem der Ansprüche 1 bis 14 realisiert, wenn es von einem Computer (1) ausgeführt wird.

FIG.1

11c
$\vec{V}$
P1 P2
11d

FIG.3A

P2
11c $\vec{V}$
P1
11d

FIG.3B

10
11
12
11
11
12
12
11
12a
$\vec{V2}$
12b
12c
11
11d
12
P2
$\vec{V1}$
$\theta$
$\vec{V}$
P1
11c

FIG.4

FIG.2A

FIG.2B

INITIALISATION — S0

DEPLACEMENT ELEMENTAIRE — S1

COLLISION ? — S2

oui

non

AFFICHAGE DU DEPLACEMENT ELEMENTAIRE — S3

ANNULATION DU DEPLACEMENT ELEMENTAIRE — S4

ELOIGNEMENT — S5

# FIG.5A

INITIALISATION — S0

DEPLACEMENT ELEMENTAIRE — S1

COLLISION ? — S2

oui

non

AFFICHAGE DU DEPLACEMENT ELEMENTAIRE — S3

ELOIGNEMENT — S5

# FIG.5B

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CHEDMAIL, DAMAY ; LE ROY.** Réalité virtuelle, maquette numérique du produit, outils de distribution et partage de la conception. *Journées Priméca,* 07 Avril 1999, Journées Priméca

- **KUFFNER et al.** Self-collision detection and prevention for humanoid robots. *Proc. IEEE International Conference on robotics and automation,* Mai 2002